# EUROPÄISCHE PATENTSCHRIFT

(11) **EP 3 750 700 B1**
(45) Veröffentlichungstag und Bekanntmachung des Hinweises auf die Patenterteilung: **11.05.2022**
(21) Anmeldenummer: 20164152.9
(22) Anmeldetag: 19.03.2020
(51) Int. Cl.: B29D 30/66

(54) **ELEKTRONISCH GESTEUERTES POSITIONIERSYSTEM MIT EINER SPIKE-SETZPISTOLE**
ELECTRONICALLY CONTROLLED POSITIONING SYSTEM WITH A SPIKE SETTING PISTOL
SYSTÈME DE POSITIONNEMENT À COMMANDE ÉLECTRONIQUE AVEC UN PISTOLET DE POSE DE CRAMPONS

(30) Priorität: 21.05.2019 DE 102019207430
(43) Veröffentlichungstag der Anmeldung: 16.12.2020
(73) Patentinhaber: Continental Reifen Deutschland GmbH, 30165 Hannover (DE)
(72) Erfinder: Koch, Tim, 30419 Hannover (DE)
(74) Vertreter: Continental Corporation

(56) Entgegenhaltungen:
- EP-A1- 3 088 170
- JP-A- S5 795 203
- SE-L- 8 402 522

## Beschreibung

Die Erfindung betrifft ein elektronisch gesteuertes Positioniersystem mit zumindest einem Positioniermechanismus zum Positionieren einer eine in Spike-Setzrichtung verlaufende Hauptachse aufweisenden Spike-Setzpistole gegenüber der Außenfläche eines zu bespikenden Laufstreifens eines Fahrzeugluftreifens, wobei jeder Positioniermechanismus Folgendes aufweist:
- einen ersten und einen zweiten Horizontalschlitten sowie einen Vertikalschlitten,
- zumindest ein erstes prismatisches Gelenk zur linearen Bewegung des ersten Horizontalschlittens,
- zumindest ein zweites prismatisches Gelenk zur linearen Bewegung des zweiten Horizontalschlittens parallel zum ersten Horizontalschlitten,
- zumindest ein weiteres prismatisches Gelenk an jedem Horizontalschlitten zur Bewegung des Vertikalschlittens im Wesentlichen quer zu den Bewegungsrichtungen der Horizontalschlitten,
- zumindest ein Drehgelenk an jedem Horizontalschlitten zur Winkelbewegung des Vertikalschlittens gegenüber den Horizontalschlitten,
- je einen Antrieb zu Betätigung der prismatischen Gelenke.

Ein derartiges Positioniersystem ist aus der EP 3 088 170 A1 bekannt. Der Positioniermechanismus dieses Systems gestattet es, die Spike-Setzpistole je Spikesetzvorgang stets senkrecht zur Oberfläche des Laufstreifens des Fahrzeugluftreifens auszurichten, sodass der jeweilige Spike beim Setzen nicht verkippt wird. Durch die exakte Positionierung tritt auch keine ungleichmäßige Reibung zwischen dem Spike und dem Gummimaterial um das im Fahrzeugluftreifen einvulkanisierte Spikeloch beim Setzen des Spikes auf. Der Positioniermechanismus lässt sich zudem trotz vorteilhafter Beweglichkeit sehr steif ausführen, was eine Voraussetzung für eine hohe Positioniergenauigkeit ist.

Spikes weisen üblicherweise einen Spikekörper und einen Spikepin auf, welcher einen Endabschnitt besitzt, welcher im eingesetzten Zustand des Spikes über die Laufstreifenperipherie etwas vorsteht. Es ist bekannt, Spikepins eine längliche Gestalt zu verleihen, sodass je nach Ausrichtung bzw. Neigung des Spikepins relativ zur Umfangsrichtung des Laufstreifens auf bestimmte Fahreigenschaften, etwa die Seitenkraftübertragung oder die Brems- und Traktionskraftübertragung, Einfluss genommen werden kann.

Des Weiteren ist es beispielsweise aus der DE 102017208 416 A bekannt, in den Laufstreifen eines Reifens Spikes unterschiedlicher Typen einzusetzen. So können Spikes eines ersten Typs Spikepins aufweisen, welche derart gestaltet sind, dass sie eine bessere Seitenkraftübertragung bewirken als die Spikepins der Spikes eines zweiten Typs, welche beispielsweise derart gestaltet sind, dass sie eine bessere Brems- und Traktionskraftübertragung bewirken als die Spikepins der Spikes des ersten Typs.

Bei einer weiteren möglichen Ausgestaltung der Spikes können Spikes unterschiedlich gestaltete oder ausgeführte Spikekörper aufweisen, beispielsweise um eine unterschiedliche Art der Einbettung im Gummimaterial des Laufstreifens zu bewirken, ebenfalls in Abhängigkeit von der Spikeposition.

Insbesondere bei Fahrzeugluftreifen mit laufrichtungsgebunden ausgeführten Laufstreifen, dies sind Fahrzeugluftreifen, die mit einer bestimmten Abrollrichtung bei Vorwärtsfahrt am jeweiligen Fahrzeug zu montieren sind, ist eine bestimmte Ausrichtung und Anordnung spezieller Spiketypen relativ zur Umfangsrichtung des Laufstreifens besonders vorteilhaft.

Der Erfindung liegt die Aufgabe zugrunde, ein Positioniersystem eingangs genannter Art derart auszugestalten, dass ein automatisches Setzen von Spikes mit unterschiedlichen Drehwinkeln ihrer Spikepins relativ zur Umfangsrichtung des Laufstreifens möglich ist.

Gelöst wird die gestellte Aufgabe erfindungsgemäß dadurch, dass am Vertikalschlitten eine Pistolenbasis vorgesehen ist, an welcher die Spike-Setzpistole, mittels eines Drehantriebs um ihre Hochachse drehbar, angeordnet ist.

Das erfindungsgemäße Positioniersystem gestattet daher das Setzen von Spikes unter bestimmten und wählbaren Drehwinkeln relativ zur Umfangsrichtung des Laufstreifens, nach wie vor jedoch senkrecht zur Laufstreifenoberfläche. Dabei kann die elektronische Steuerung sicherstellen, dass in jeder Spikeposition ein Spike mit dem individuell vorgesehenen Dreh- bzw. Neigungswinkel gesetzt wird.

Bei einer bevorzugten Ausführung ist die Spike-Setzpistole jedes Positioniermechanismus zumindest um bis zu +/- 90°, insbesondere um bis zu +/- 180° drehbar. Diese Maßnahme gestattet ein Setzen von Spikes an jeder Spikeposition mit einem individuell vorgesehenen Drehwinkel.

Ist, gemäß einer weiteren bevorzugten Ausführung, die jeweilige Spike-Setzpistole, beispielsweise servomotorisch, kontinuierlich drehbar, so lässt sich jeder Winkel im möglichen Winkelbereich individuell wählen.

Bei einer weiteren, ebenfalls vorteilhaften Ausführungsvariante, ist der Drehantrieb ein pneumatischer Antrieb, sodass die jeweilige Spike-Setzpistole um diskrete Drehwinkel drehbar ist.

Besonders vorteilhaft ist ferner ein Positioniersystem mit zwei Positioniermechanismen von insbesondere gleicher Bauart. Die beiden Positioniermechanismen können bevorzugt mit ihren Horizontalschlitten an einer gemeinsamen Basis bewegbar angeordnet sein. Diese Maßnahme unterstützt einen kompakten Aufbau des Positioniersystems.

Besonders vorteilhaft ist eine Ausführung des zwei Positioniermechanismen aufweisenden Positioniersystems, bei welcher an jede Spike-Setzpistole eine Spike-Zuführeinrichtung angesetzt ist, wobei über die eine Spike-Zuführeinrichtung der einen Spike-Setzpistole Spikes eines ersten Spiketyps zuführbar sind und wobei über die andere Spike-Zuführeinrichtung der anderen Spike-Setzpistole Spikes eines zweiten Spiketyps zuführbar sind. Somit können in einem Laufstreifen eines Fahrzeugluftreifens gezielt Spikes unterschiedlicher Ausgestaltung gesetzt werden, beispielsweise Spikes eines Typs, der für eine vorteilhafte Seitenkraftübertragung sorgt, und Spikes eines Typs, welcher für eine bessere Brems- und Traktionskraftübertragung sorgt.

Bevorzugt ist ferner eine Ausführung des Positioniersystems, bei der die beiden Positioniermechanismen derart elektronisch steuerbar sind, dass der eine Positioniermechanismus Spikes des ersten Typs in die für diesen Spiketyp vorgesehenen Spikepositionen am Laufstreifen des Fahrzeugluftreifens setzt und anschließend der andere Positioniermechanismus Spikes des zweiten Typs in die für diesen Spiketyp vorgesehenen Spikepositionen am Laufstreifen des Fahrzeugluftreifens setzt. Diese Art des Spikesetzens wird daher anhand von mindestens zwei kompletten Umfangsdrehungen des Fahrzeugluftreifens durchgeführt.

Bei einer weiteren bevorzugten Ausführung, die bei einer einmaligen, kompletten Umfangsdrehung des Fahrzeugluftreifens oder bei mehreren Umdrehungen durchführbar ist, sind die beiden Positioniermechanismen derart elektronisch steuerbar, dass beim Bespiken des Fahrzeugluftreifens die beiden Positioniermechanismen abwechselnd Spikes setzen, der eine Positioniermechanismus zumindest einen Spike des ersten Typs in eine der für diesen Spiketyp vorgesehenen Spikepositionen am Laufstreifen und der andere Positioniermechanismus zumindest einen Spike des zweiten Spiketyps in eine der für diesen Spiketyp vorgesehenen Spikepositionen am Laufstreifen.

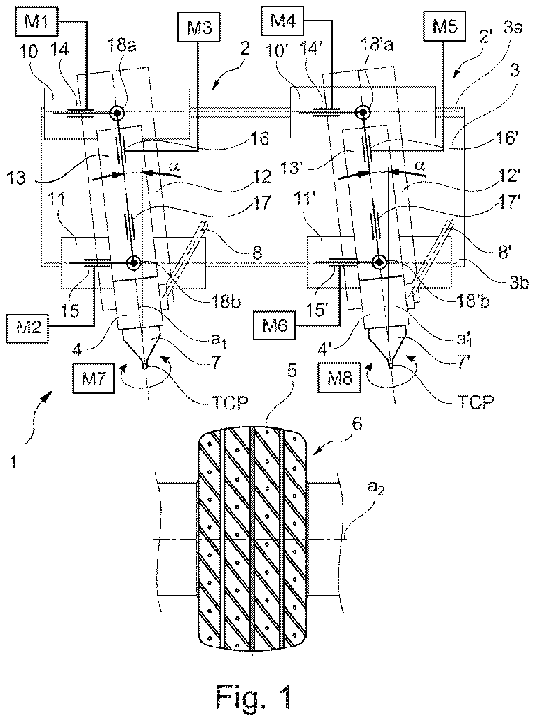

Weitere Merkmale, Vorteile und Einzelheiten der Erfindung werden nun anhand der einzigen Darstellung, die schematisch ein Ausfuhrungsbeispiel der Erfindung zeigt, näher beschrieben. Dabei ist in Fig. 1 eine schematische Ansicht eines Positioniersystems gemäß der Erfindung gezeigt.

Fig. 1 zeigt eine Positioniersystem 1 zum Bespiken von Laufstreifen von Fahrzeugluftreifen mit zwei übereinstimmend gestalteten, ggf. zueinander spiegelsymmetrisch angeordneten Positioniermechanismen 2, 2'. Die beiden Positioniermechanismen 2, 2' sind nebeneinander an einer Basis 3 in noch zu beschreibender Weise angeordnet.

Jeder Positioniermechanismus 2, 2' weist eine Spike-Setzpistole 4, 4' auf, deren Ausrichtung gegenüber einem Laufstreifen 5 eines in Fig. 1 angedeuteten Fahrzeugluftreifens 6 variabel einstellbar ist. Jede Spike-Setzpistole 4, 4' ist mit einem Pistolenkopf 7, 7' versehen, an eine Spike-Zuführeinrichtung 8, 8' gekoppelt und weist eine sich in Spike-Setzrichtung erstreckende Hauptachse a₁, a₁ 'auf. Der Fahrzeugluftreifens 6 ist unter Innendruck stehend auf einer Felge einer Einspannvorrichtung 9, deren weiteren Bestandteile nicht dargestellt sind, montiert, weist im Laufstreifen 5 eine Vielzahl von Spikelöchern auf und wird beim Bespiken in an sich bekannter Weise schrittweise gedreht, wobei in Fig. 1 a₂ die Reifendrehachse bezeichnet.

Über die Zufuhreinrichtung 8 werden der Spike-Setzpistole 4 des einen Positioniermechanismus 2 Spikes eines ersten Typs, über die Zuführeinrichtung 8' der Spike-Setzpistole 4' des zweiten Positioniermechanismus 2' Spikes eines zweiten Typs zugeführt. Die Spikes weisen jeweils einen Spikekörper und einen in diesem gehaltenen Spikepin auf, wobei sich die Spikes des ersten Typs von den Spikes des zweiten Typs beispielsweise in der Ausgestaltung ihrer Spikepins und/oder ihrer Spikekörper unterscheiden. So können etwa Spikes des ersten Typs Spikepins aufweisen, welche derart gestaltet sind, dass sie eine bessere Seitenkraftübertragung bewirken, als die Spikepins der Spikes des zweiten Typs, welche beispielsweise derart gestaltet sind, dass sie eine bessere Brems- und Traktionskraftübertragung bewirken als die Spikepins der Spikes des ersten Typs. Bei einer weiteren möglichen Ausgestaltung der Spikes können Spikes der beiden Spike- Typen zusätzlich oder alternativ unterschiedlich gestaltete oder ausgeführte Spikekörper aufweisen, beispielsweise um eine unterschiedliche Art der Einbettung im Gummimaterial des Laufstreifens zu bewirken.

Die Spike-Setzpistole 4, 4' wird bei jedem Setzvorgang derart gegenüber dem Laufstreifen 5 des Fahrzeugluftreifens 6 positioniert, dass sich ihre in Spike-Setzrichtung erstreckende Hauptachse a₁, a₁ 'vor jedem Setzvorgang senkrecht zur Reifenaußenfläche an der jeweiligen Spike-Setzposition und koaxial zum jeweiligen Spikeloch befindet.

Jeder Positioniermechanismus 2, 2' betätigt einen ersten und einen zweiten Horizontalschlitten 10, 11 bzw. 10', 11' sowie einen auf den beiden Horizontalschlitten 10, 11 bzw. 10', 11' angeordneten Vertikalschlitten 12, 12', auf welchem jeweils eine Pistolenbasis 13, 13' befestigt ist, an welcher die Spike-Setzpistole 4, 4' angeordnet ist. Die beiden Positioniermechanismen 2, 2' sind an der Basis 3 an parallel zueinander verlaufenden Linearführungen 3a, 3b, die beispielsweise schienenartige Führungen sind, mittels erster und zweiter prismatischer Gelenke 14, 14' bzw. 15, 15', welche jeweils eine lineare Bewegung der Horizontalschlitten 10, 10' bzw. 11, 11' unabhängig voneinander ermöglichen, bewegbar. Dritte und vierte prismatische Gelenke 16, 17 bzw. 16', 17', die auf den Horizontalschlitten 10, 11, 10', 11' angeordnet sind, ermöglichen eine lineare Bewegung des jeweiligen Vertikalschlittens 12, 12' im Wesentlichen quer zu und gegenüber den beiden Horizontalschlitten 10, 11 bzw. 10', 11'. Die Hauptachsen a₁, a₁ 'der auf den Vertikalschlitten 12, 12' angeordneten Spike-Setzpistolen 4, 4' verlaufen in der Grundstellung parallel zur Bewegungsrichtung der prismatischen Gelenke 16, 17 bzw. 16', 17'. Die prismatischen Gelenke 14, 14', 15, 15' und 16, 16' - alternativ die Gelenke 17, 17'- -sind, jedes Gelenk für sich, mittels Stellgliedern, insbesondere mittels Antrieben M₁, M₂, M₃ (Positioniermechanismus 2) bzw. mittels Antrieben M₄, M₅, M₆ (Positioniermechanismus 2') programmgesteuert bewegbar, insbesondere über eine vorgesehene elektronische Anlagensteuerung. Die Antriebe M₁, M₂, M₃ und M₄, M₅, M₆ sind insbesondere Servomotoren. Zwei passive Drehgelenke 18a, 18b bzw. 18'a, 18'b gestatten eine Winkelbewegung des jeweiligen Vertikalschlittens 12, 12' gegenüber den beiden Horizontalschlitten 10, 11 bzw. 10', 11'. Der Winkel α der Hauptachse a₁, a₁ 'der jeweiligen Spike-Setzpistole 4, 4' ist gegenüber einer Orthogonalen zur Reifendrehachse a₂ um beispielsweise +/- 15° einstell- und veränderbar.

Jede Spike-Setzpistole 4, 4' ist ferner mittels eines weiteren separaten Antriebes M₇ bzw. M₈ um ihre Hauptachse a₁, a₁' in beide Drehrichtungen drehbar. Insbesondere ermöglicht der Drehantrieb M₇ bzw. M₈, vorzugsweise servomotorisch, kontinuierliche Drehungen der jeweiligen Spike-Setzpistole 4, 4' vorzugsweise bis zu +/- 90°, insbesondere bis zu +/- 180°. Die Antriebe M₇ bzw. M₈ können auch pneumatische Antriebe sein, die insbesondere diskrete Drehlagen ermöglichen.

Zum Setzen von Spikes in die Spikelöcher im Laufstreifen 5 des Fahrzeugluftreifens 6 wird beispielsweise vorerst der eine Positioniermechanismus, etwa der Positioniermechanismus 2, mit welchem beispielsweise Spikes des ersten Typs gesetzt werden, gegenüber dem aufgespannten Fahrzeugluftreifen 6 derart ausgerichtet, dass die linearen Bewegungen der Horizontalschlitten 10, 11 parallel zur Reifenachse a₂ erfolgen. Zur Ausrichtung der Spike-Setzpistole 4 wird der Tool Center Point (TCP) an der Spitze des Pistolenkopfes 7 automatisch über die elektronische Steuerung der Anlage eingestellt. Je nach einzustellender Position wird nur eines der angetriebenen prismatischen Gelenke 14, 15, 16 oder es werden zwei oder alle drei dieser prismatischen Gelenke in Kombination miteinander betätigt, bis die Spike-Setzpistole 4 des Positioniermechanismus 2 derart positioniert ist, dass ihre Hauptachse a₁ an der Spikelochposition orthogonal zur Laufstreifenoberfläche und koaxial zum entsprechenden Spikeloch verläuft. Zum Setzen eines Spikes mit einer bestimmten Winkellage (Drehwinkel) des Spikepins relativ zur Umfangsrichtung des Laufstreifens, wird mittels des Antriebes M₇ die Spike-Setzpistole 4 in die entsprechende Setzposition gedreht. Der Antrieb M₃ fährt nun den TCP auf Basis der Positionsdaten und auf Basis etwaiger weiterer Vorgaben, insbesondere einer vorgegebenen Setztiefe des Spikes, aus, sodass der TCP in das betreffende Spikeloch eintaucht. Anschließend wird der Spike in das Loch gesetzt und der TCP durch Zurückfahren des Antriebes M₃ von der Reifenoberfläche wegbewegt. Auf analoge Weise werden weitere Spikes des ersten Spiketyps an sämtlichen für diesen Spiketyp vorgesehenen Spikepositionen in die Spikelöcher gesetzt.

Anschließend erfolgt ein Setzen der Spikes des zweiten Spiketyps mittels des zweiten Positioniermechanismus 2' auf analoge Weise, bis auch die betreffenden Spikelöcher im Laufstreifen mit Spikes versehen sind und der Laufstreifen komplett bespiket worden ist.

Der Fahrzeugluftreifen wird entlüftet und aus der Einspannvorrichtung 9 entfernt. Selbstverständlich ist es auch möglich, beim Bespiken eines Reifens beliebig zwischen den beiden Positioniermechanismen 2, 2' zu wechseln, beispielsweise um die Zykluszeit des Spikesetzens zu verkürzen.

### Bezugsziffernliste

- 1: Positioniersystem
- 2, 2': Positioniermechanismus
- 3: Basisplatte
- 3a, 3b: Linearführung
- 4, 4': Spike-Setzpistole
- 5: Laufstreifen
- 6: Fahrzeugluftreifen
- 7, 7': Pistolenkopf
- 8, 8': Zuführeinrichtung
- 9: Einspannvorrichtung
- 10, 11, 10', 11': Horizontalschlitten
- 12, 12': Vertikalschlitten
- 13, 13': Pistolenbasis
- 14, 15, 14', 15': prismatisches Gelenk
- 16, 17, 16', 17': prismatisches Gelenk
- 18a, 18b, 18'a, 18'b: passives Drehgelenk
- α: Winkel
- a₁, a₁', a₂: Hauptachse
- M₁, M₂, M₃: Antrieb
- M₄, M₅, M₆: Antrieb
- M₇, M₈: Antrieb

## Patentansprüche

1. Elektronisch gesteuertes Positioniersystem (1) mit zumindest einem Positioniermechanismus (2, 2') zum Positionieren einer, eine in Spike-Setzrichtung verlaufende Hauptachse (a₁,a₁') aufweisenden Spike-Setzpistole (4, 4') gegenüber der Außenfläche eines zu bespikenden Laufstreifens (5) eines Fahrzeugluftreifens (6), wobei jeder Positioniermechanismus (2, 2') Folgendes aufweist:
- einen ersten und einen zweiten Horizontal schlitten (10, 11, 10', 11') sowie einen Vertikal schlitten (12, 12'),
- zumindest ein erstes prismatisches Gelenk (14, 14') zur linearen Bewegung des ersten Horizontalschlittens (10, 10'),
- zumindest ein zweites prismatisches Gelenk (15, 15') zur linearen Bewegung des zweiten Horizontalschlittens (11, 11') parallel zum ersten Horizontalschlitten (10, 10'),
- zumindest ein weiteres prismatisches Gelenk (16, 16', 17, 17') an jedem Horizontalschlitten (10, 11, 10', 11') zur Bewegung des Vertikalschlittens (12, 12') im Wesentlichen quer zu den Bewegungsrichtungen der Horizontalschlitten (10, 11, 10', 11'),
- zumindest ein Drehgelenk (18a, 18b; 18'a, 18'b) an jedem Horizontalschlitten (10, 11, 10', 11') zur Winkelbewegung des Vertikal schlittens (12, 12') gegenüber den Horizontalschlitten (10, 11, 10', 11'),
- je einen Antrieb (M₁, M₂, M₃, M₄, M₅, M₆) zur Betätigung der prismatischen Gelenke (14, 14', 15, 15', 16, 16'),
**dadurch gekennzeichnet,**
**dass** am Vertikalschlitten (12, 12') eine Pistolenbasis (13, 13') vorgesehen ist, an welcher die Spike-Setzpistole (4, 4'), mittels eines Drehantriebs (M₇, M₈) um ihre Hauptachse (a₁,a₁') drehbar, angeordnet ist.

2. Positioniersystem (1) nach Anspruch 1, **dadurch gekennzeichnet, dass** die Spike-Setzpistole (4, 4') zumindest um bis zu +/- 90°, insbesondere um bis zu +/- 180° drehbar ist.

3. Positioniersystem (1) nach Anspruch 1 oder 2, **dadurch gekennzeichnet, dass** die Spike-Setzpistole (4, 4'), beispielsweise servomotorisch, kontinuierlich drehbar ist.

4. Positioniersystem (1) nach Anspruch 1 oder 2, **dadurch gekennzeichnet, dass** der Drehantrieb (M7, M8) ein pneumatischer Antrieb ist, sodass die Spike-Setzpistole (4, 4') um diskreten Drehwinkel drehbar ist.

5. Positioniersystem (1) mit zwei Positioniermechanismen (2, 2'), insbesondere gleicher Bauart, nach einem der Ansprüche 1 bis 4, **dadurch gekennzeichnet, dass** die Horizontalschlitten (10, 11, 10', 11') der beiden Positioniermechanismen (2, 2') an einer gemeinsamen Basis (3) bewegbar angeordnet sind.

6. Positioniersystem (1) mit zwei Positioniermechanismen (2, 2'), insbesondere gleicher Bauart, nach einem der Ansprüche 1 bis 5, **dadurch gekennzeichnet, dass** an jede Spike-Setzpistole (4, 4') eine Spike-Zuführeinrichtung (8, 8') angesetzt ist, wobei über die eine Spike-Zuführeinrichtung (8) der einen Spike-Setzpistole (4) Spikes eines ersten Spiketyps zuführbar sind und wobei über die andere Spike-Zuführeinrichtung (8') der anderen Spike-Setzpistole (4') Spikes eines zweiten Spiketyps zuführbar sind.

7. Positioniersystem (1) nach Anspruch 5 oder 6, **dadurch gekennzeichnet, dass** die beiden Positioniermechanismen (2, 2') derart elektronisch steuerbar sind, dass der eine Positioniermechanismus (2) zuerst Spikes des ersten Typs in die für diesen Spiketyp vorgesehenen Spikepositionen am Laufstreifen (5) des Fahrzeugluftreifens (6) setzt und anschließend der andere Positioniermechanismus (2') Spikes des zweiten Spiketyps in die für diesen Spiketyp vorgesehenen Spikepositionen am Laufstreifen (5) des Fahrzeugluftreifens (6) setzt.

8. Positioniersystem (1) nach Anspruch 5 oder 6, **dadurch gekennzeichnet, dass** die beiden Positioniermechanismen (2, 2') derart elektronisch steuerbar sind, dass beim Bespiken eines Fahrzeugluftreifens (6) die beiden Positioniermechanismen (2, 2') abwechselnd Spikes setzen, der eine Positioniermechanismus (2) zumindest einen Spike des ersten Typs in eine der für diesen Spiketyp vorgesehenen Spikepositionen am Laufstreifen (5) und der andere Positioniermechanismus (2') zumindest einen Spike des zweiten Spiketyps in eine der für diesen Spiketyp vorgesehenen Spikepositionen am Laufstreifen (5).

## Claims

1. Electronically controlled positioning system (1) with at least one positioning mechanism (2, 2') for positioning a spike setting gun (4, 4'), having a principal axis (a₁, a₁') extending in the spike setting direction, with respect to the outer surface of a tread (5) of a pneumatic vehicle tyre (6) to be provided with spikes, each positioning mechanism (2, 2') having the following:
- a first and a second horizontal slide (10, 11, 10', 11') and a vertical slide (12, 12'),
- at least one first prismatic joint (14, 14') for the linear movement of the first horizontal slide (10, 10'),
- at least one second prismatic joint (15, 15') for the linear movement of the second horizontal slide (11, 11') parallel to the first horizontal slide (10, 10'),
- at least one further prismatic joint (16, 16', 17, 17') on each horizontal slide (10, 11, 10', 11') for the movement of the vertical slide (12, 12') substantially transversely to the directions of movement of the horizontal slides (10, 11, 10', 11'),
- at least one rotary joint (18a, 18b; 18'a, 18'b) on each horizontal slide (10, 11, 10', 11') for the angular movement of the vertical slide (12, 12') with respect to the horizontal slides (10, 11, 10', 11'),
- a respective drive (M₁, M₂, M₃, M₄, M₅, M₆) for the actuation of the prismatic joints (14, 14', 15, 15', 16, 16'),
**characterized**
**in that** arranged on the vertical slide (12, 12') is a gun base (13, 13'), on which the spike setting gun (4, 4') is rotatable about its principal axis (a1, a1') by means of a rotary drive (M₇, M₈).

2. Positioning system (1) according to Claim 1, **characterized in that** the spike setting gun (4, 4') is rotatable at least by up to +/- 90°, in particular by up to +/-180°.

3. Positioning system (1) according to Claim 1 or 2, **characterized in that** the spike setting gun (4, 4') is continuously rotatable, for example by means of a servomotor.

4. Positioning system (1) according to Claim 1 or 2, **characterized in that** the rotary drive (M₇, M₈) is a pneumatic drive, so that the spike setting gun (4, 4') is rotatable by discrete angles of rotation.

5. Positioning system (1) with two positioning mechanisms (2, 2'), in particular of the same type, according to one of Claims 1 to 4, **characterized in that** the horizontal slides (10, 11, 10', 11') of the two positioning mechanisms (2, 2') are movably arranged on a common base (3).

6. Positioning system (1) with two positioning mechanisms (2, 2'), in particular of the same type, according to one of Claims 1 to 5, **characterized in that** a spike feeding device (8, 8') is attached to each spike setting gun (4, 4'), spikes of a first spike type being feedable by means of the one spike feeding device (8) to the one spike setting gun (4) and spikes of a second spike type being feedable by means of the other spike feeding device (8') to the other spike setting gun (4').

7. Positioning system (1) according to Claim 5 or 6, **characterized in that** the two positioning mechanisms (2, 2') are electronically controllable in such a way that the one positioning mechanism (2) first sets spikes of the first type in the spike positions intended for this spike type on the tread (5) of the pneumatic vehicle tyre (6) and subsequently the other positioning mechanism (2') sets spikes of the second spike type in the spike positions intended for this spike type on the tread (5) of the pneumatic vehicle tyre (6).

8. Positioning system (1) according to Claim 5 or 6, **characterized in that** the two positioning mechanisms (2, 2') are electronically controllable in such a way that, when providing spikes on a pneumatic vehicle tyre (6), the two positioning mechanisms (2, 2') set spikes alternately, the one positioning mechanism (2) at least one spike of the first type in one of the spike positions intended for this spike type on the tread (5) and the other positioning mechanism (2') at least one spike of the second type in one of the spike positions intended for this spike type on the tread (5).

## Revendications

1. Système de positionnement commandé électroniquement (1) comprenant au moins un mécanisme de positionnement (2, 2') pour positionner un pistolet de pose de crampons (4, 4') présentant un axe principal (a₁, a₁') s'étendant dans la direction de pose de crampons par rapport à la surface extérieure d'une bande de roulement à cramponner (5) d'un pneumatique de véhicule (6), chaque mécanisme de positionnement (2, 2') présentant :
- un premier et un deuxième chariot horizontal (10, 11, 10', 11') ainsi qu'un chariot vertical (12, 12'),
- au moins une première articulation prismatique (14, 14') pour déplacer linéairement le premier chariot horizontal (10, 10'),
- au moins une deuxième articulation prismatique (15, 15') pour déplacer linéairement le deuxième chariot horizontal (11, 11') parallèlement au premier chariot horizontal (10, 10'),
- au moins une autre articulation prismatique (16, 16', 17, 17') sur chaque chariot horizontal (10, 11, 10', 11') pour déplacer le chariot vertical (12, 12') essentiellement transversalement aux directions de déplacement des chariots horizontaux (10, 11, 10', 11'),
- au moins une articulation rotative (18a, 18b ; 18'a, 18'b) sur chaque chariot horizontal (10, 11, 10', 11') pour déplacer angulairement le chariot vertical (12, 12') par rapport aux chariots horizontaux (10, 11, 10', 11'),
- un entraînement respectif (M₁, M₂, M₃, M₄, M₅, M₆) pour l'actionnement des articulations prismatiques (14, 14', 15, 15', 16, 16'),
**caractérisé en ce que**
une base de pistolet (13, 13') est prévue sur le chariot vertical (12, 12'), sur laquelle le pistolet de pose de crampons (4, 4') est agencé de manière à pouvoir tourner autour de son axe principal (a₁, a₁') au moyen d'un entraînement en rotation (M₇, M₈).

2. Système de positionnement (1) selon la revendication 1, **caractérisé en ce que** le pistolet de pose de crampons (4, 4') peut être tourné d'au moins jusqu'à +/- 90°, notamment jusqu'à +/- 180°.

3. Système de positionnement (1) selon la revendication 1 ou 2, **caractérisé en ce que** le pistolet de pose de crampons (4, 4') peut être tourné en continu, par exemple par servomoteur.

4. Système de positionnement (1) selon la revendication 1 ou 2, **caractérisé en ce que** l'entraînement en rotation (M7, M8) est un entraînement pneumatique, de telle sorte que le pistolet de pose de crampons (4, 4') peut tourner selon des angles de rotation discrets.

5. Système de positionnement (1) comprenant deux mécanismes de positionnement (2, 2'), notamment de même type, selon l'une quelconque des revendications 1 à 4, **caractérisé en ce que** les chariots horizontaux (10, 11, 10', 11') des deux mécanismes de positionnement (2, 2') sont agencés de manière mobile sur une base commune (3).

6. Système de positionnement (1) comprenant deux mécanismes de positionnement (2, 2'), notamment de même type, selon l'une quelconque des revendications 1 à 5, **caractérisé en ce qu'**un dispositif d'amenée de crampons (8, 8') est monté sur chaque pistolet de pose de crampons (4, 4'), des crampons d'un premier type de crampons pouvant être amenés par l'intermédiaire d'un dispositif d'amenée de crampons (8) à un pistolet de pose de crampons (4) et des crampons d'un deuxième type de crampons pouvant être amenés par l'intermédiaire de l'autre dispositif d'amenée de crampons (8') à l'autre pistolet de pose de crampons (4').

7. Système de positionnement (1) selon la revendication 5 ou 6, **caractérisé en ce que** les deux mécanismes de positionnement (2, 2') peuvent être commandés électroniquement de telle sorte qu'un mécanisme de positionnement (2) pose tout d'abord des crampons du premier type dans les positions de crampons prévues pour ce type de crampons sur la bande de roulement (5) du pneumatique de véhicule (6), et ensuite l'autre mécanisme de positionnement (2') pose des crampons du deuxième type de crampons dans les positions de crampons prévues pour ce type de crampons sur la bande de roulement (5) du pneumatique de véhicule (6).

8. Système de positionnement (1) selon la revendication 5 ou 6, **caractérisé en ce que** les deux mécanismes de positionnement (2, 2') peuvent être commandés électroniquement de telle sorte que, lors du cramponnage d'un pneumatique de véhicule (6), les deux mécanismes de positionnement (2, 2') posent des crampons en alternance, un mécanisme de positionnement (2) posant au moins un crampon du premier type dans une des positions de crampons prévue pour ce type de crampons sur la bande de roulement (5) et l'autre mécanisme de positionnement (2') posant au moins un crampon du deuxième type de crampons dans une des positions de crampons prévues pour ce type de crampons sur la bande de roulement (5).
